(19) Europäisches Patentamt
European Patent Office
Office européen des brevets

(11) Veröffentlichungsnummer: **0 305 816 B1**

(12) # EUROPÄISCHE PATENTSCHRIFT

(45) Veröffentlichungstag der Patentschrift: **16.03.94**

(51) Int. Cl.[5]: **C08L 69/00**, C08K 5/49, //(C08L69/00,67:02,27:18,51:00)

(21) Anmeldenummer: **88113391.2**

(22) Anmeldetag: **18.08.88**

Die Akte enthält technische Angaben, die nach dem Eingang der Anmeldung eingereicht wurden und die nicht in dieser Patentschrift enthalten sind.

(54) **Flammwidrige thermoplastische Formmassen auf Basis von Polycarbonat, Polyalkylenterephthalat, Pfropfcopolymerisat, fluoriertem Polyolefin und Phosphorverbindung.**

(30) Priorität: **29.08.87 DE 3728924**

(43) Veröffentlichungstag der Anmeldung: **08.03.89 Patentblatt 89/10**

(45) Bekanntmachung des Hinweises auf die Patenterteilung: **16.03.94 Patentblatt 94/11**

(84) Benannte Vertragsstaaten: **DE FR GB IT**

(56) Entgegenhaltungen:
**EP-A- 0 064 648**
**EP-A- 0 110 222**
**EP-A- 0 174 493**
**EP-A- 0 226 922**

(73) Patentinhaber: **BAYER AG**

**D-51368 Leverkusen(DE)**

(72) Erfinder: **Wittmann, Dieter, Dr.**
**Doerperhofstrasse 15**
**D-4150 Krefeld(DE)**
Erfinder: **Kress, Hans-Jürgen, Dr. c/o Mobay Corporation**
**Plastics and Rubber Division**
**Mobay Road**
**Pittsburgh, PA 15205(US)**
Erfinder: **Peters, Horst, Dr.**
**Winterberg 25**
**D-5090 Leverkusen 3(DE)**
Erfinder: **Buekers, Josef**
**Kneinstrasse 58a**
**D-4150 Krefeld(DE)**
Erfinder: **Lindner, Christian, Dr.**
**Riehlerstrasse 200**
**D-5000 Köln 60(DE)**

EP 0 305 816 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen aus aromatischem Polycarbonat, Polyalkylenterephthalat, Pfropfpolymerisat, fluoriertem Polyolefin und Phosphorverbindung, ein Verfahren zur Herstellung dieser Formmassen durch Mischen der Komponenten bei erhöhter Temperatur sowie die Verwendung der Formmassen zur Herstellung von Formkörpern, vornehmlich durch Spritzguß.

Formmassen aus aromatischem Polycarbonat, Polyalkylenterephthalat und kautschukelastischem Polymerisat sind bekannt (US-PS 3 864 428, EP-A 25 920, 64 648, 110 222, JP-A 59-166 556). Sie lassen sich zu hochschlagzähen Formkörpern verarbeiten.

Überraschenderweise wurde nun gefunden, daß Formmassen aus aromatischem Polycarbonat, Polyalkylenterephthalat und kautschukelastischem Polymerisat, fluoriertem Polyolefin und Phosphorverbindung eine besonders vorteilhafte Kombination von Flammwidrigkeit, Fließnahtfestigkeit, Wärmeformbeständigkeit und Zähigkeit besitzen.

Diese Eigenschaftskombination ist insbesondere bei komplizierten flammgeschützten Formkörpern, wie z.B. bei Computergehäusen, wichtig, wo konstruktiv bedingte Durchbrüche, Stege u.ä. eine hohe Grundzähigkeit, verbunden mit möglichst hoher Fließnahtfestigkeit und thermischer Belastbarkeit, erfordern.

Gegenstand der Erfindung sind thermoplastische Formmassen aus

A. 45 bis 95, vorzugsweise 60 bis 90, Gew.-% aromatischem Polycarbonat,
B. 5 bis 55, vorzugsweise 10 bis 40, Gew.-% Polyalkylenterephthalat,
C. 0,1 bis 30, vorzugsweise 0,1 bis 12, insbesondere 0,1 bis 3, Gew.-% Pfropfpolymerisat,
D. 0,05 bis 5, vorzugsweise 0,1 bis 1, insbesondere 0,1 bis 0,5, Gew.-% fluoriertem Polyolefin und
E. 1 bis 20, vorzugsweise 2 bis 15, Gew.-% Phosphorverbindung der Formel

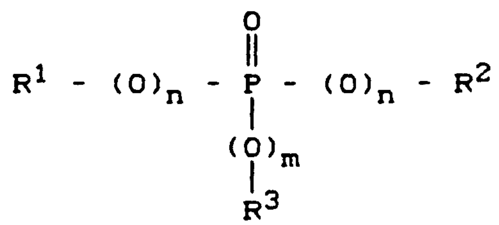

worin

| | |
|---|---|
| $R^1$, $R^2$ und $R^3$ | unabhängig voneinander gegebenenfalls halogeniertes $C_1$-$C_8$-Alkyl oder gegebenenfalls halogeniertes $C_6$-$C_{20}$-Aryl, |
| m | Null oder 1 und |
| n | Null oder 1 bedeuten, |

wobei sich die obigen Prozentangaben jeweils auf die Summe der Komponenten A + B beziehen.

Aus der DE-OS 35 12 638 sind Formmassen aus aromatischem Polycarbonat, Pfropfpolymerisat, Copolymerisat, fluoriertem Polyolefin, Halogenverbindung und Phosphorverbindung bekannt. Sie sollen sich zu Formkörpern mit guter Oberflächenqualität und hoher Flammwidrigkeit verarbeiten lassen, die im Brandfall eine verminderte Tropfneigung besitzen. Für bestimmte Anwendungen ist die Fließnahtfestigkeit dieser Formmassen nicht ausreichend. Die erfindungsgemäße Lösung dieses Problems durch Verwendung von Polyalkylenterephthalat anstelle des Copolymerisats der DE-OS 35 12 638 wird in dieser Literaturstelle nicht nahegelegt.

Unter aromatischen Polycarbonaten A im Sinne dieser Erfindung werden Homopolycarbonate, Copolycarbonate und Mischungen dieser Polycarbonate verstanden, denen z.B. mindestens eines der folgenden Diphenole zugrunde liegt:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,

α,α'-Bis-(hydroxyphenyl)-diisopropylbenzole
sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind z.B.
4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)propan und
1,1-Bis-(4-hydroxyphenyl)-cyclohexan.

Im allgemeinen entsprechen die für die Herstellung der aromatischen Polycarbonate A bevorzugten Diphenole der Formel

HO - Z - OH (I),

worin Z einen zweiwertigen ein- oder mehrkernigen aromatischen $C_6$-$C_{30}$-Rest bedeutet, wobei die beiden OH-Gruppen direkt an je ein C-Atom eines aromatischen Systems gebunden sind.

Besonders bevorzugte Diphenole entsprechen der Formel

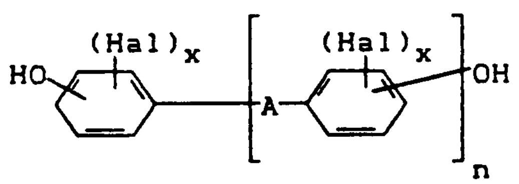

(II)

worin
A eine Einfachbindung, $C_1$-$C_5$-Alkylen, $C_2$-$C_5$-Alkyliden, $C_5$-$C_6$-Cycloalkylen oder -alkyliden, -O-, -S-,

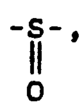

$-SO_2$- oder

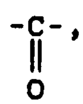

Hal Chlor oder Brom,
x Null, 1 oder 2 und
n Null oder 1 bedeuten.

Die aromatischen Polycarbonate A umfassen auch Blockcopolycarbonate, die 1 bis 20, vorzugsweise 1,5 bis 15, insbesondere 2 bis 10, Gew.-%, bezogen auf Diphenolreste des Copolycarbonats A, einkondensierte Reste von Diphenolen der Formel

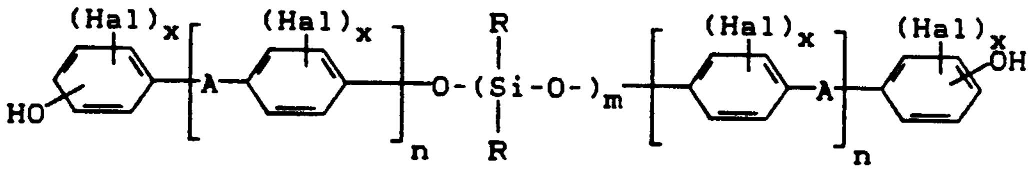

(III)

enthalten, worin

| | |
|---|---|
| A, Hal, x und n | die oben angegebene Bedeutung haben, |
| m | eine ganze Zahl von 5 bis 100, vorzugsweise von 20 bis 80, und |
| R | $C_1$-$C_{20}$-Alkyl, vorzugsweise Methyl, Ethyl, Propyl, n-Butyl, tert.-Butyl, und $C_6$-$C_{20}$-Aryl, vorzugsweise Phenyl, bedeuten mit de Maßgabe, daß die Substituenten R nicht nur in der obigen Formel (III), sondern an jedem Siliciumatom des Blockcopolycarbonats unabhängig voneinander eine der Bedeutungen innerhalb der Definition für R annehmen können. |

Wenn als aromatische Polycarbonate A Mischungen mit wenigstens einem Blockcopolycarbonat auf Basis eines Diphenols der Formel (III) eingesetzt werden, soll der Anteil einkondensierter Diphenolreste (III) vorzugsweise 1 bis 20 Gew.-%, bezogen auf die Gesamtmenge sämtlicher Diphenolreste der verwendeten aromatischen Polycarbonate A, betragen.

Die Herstellung von Blockcopolycarbonaten auf Basis von Diphenolen der Formel (III) wird beispielsweise in der DE-OS 33 34 872 und in der US-PS 3 821 325 beschrieben.

Die aromatischen Polycarbonate A können durch den Einsatz geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate A besitzen in der Regel mittlere Molekulargewichte $M_w$ von 10 000 bis 200 000, vorzugsweise von 20 000 bis 80 000, ermittelt durch Lichtstreuung.

Zur Einstellung des Molekulargewichts $M_w$ der Polycarbonate A können in bekannter Weise Kettenabbrecher, wie beispielsweise Phenole, Halogenphenole oder Alkylphenole, in den berechneten Mengen eingesetzt werden.

Besonders bevorzugte Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenole bzw. Dialkylphenole mit insgesamt 8 bis 20 C-Atomen in den Alkylsubstituenten gemäß DE-OS 3 506 472, wie 3,5-Di-tert.-butylphenol, p-iso-Octylphenol, p-tert.-Octylphenol, p-Dodecylphenol, 2-(3,5-Dimethylheptyl)-phenol und 4-(3,5-Dimethyl-heptyl)-phenol.

Die Menge an einzusetzenden Kettenabbrechern beträgt im allgemeinen zwischen 0,5 und 10 Mol-%, bezogen auf die Summe der jeweils eingesetzten Diphenole.

Besonders bevorzugte aromatische Polycarbonate A sind neben Bisphenol-A-Homopolycarbonat die Copolycarbonate aus Bisphenol-A mit bis zu 15 Mol-%, bezogen auf die Gesamtsumme Diphenole, an 2,2-Bis-(3,5-dibrom-4-hydroxyphenyl)-propan und die Copolycarbonate aus Diphenolen der Formel (II) mit 1 bis 20 Gew.-% Diphenolen der Formel (III), vorzugsweise mit A = 2.2-Propylen, bezogen auf die Summe der Diphenole (II) und (III).

Polyalkylenterephthalate B im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl Hanser Verlag, München, 1973).

Bevorzugte Polyalkylenterephthalate B enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate B können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacin-, Azelain-, Cyclohexandiessigsäure.

Die bevorzugten Polyalkylenterephthalate B können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 24 07 647, 24 07 776, 27 15 932).

Die Polyalkylenterephthalate B können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate B, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Die als Komponente B vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gewichtsteile) bei 25 °C.

Die Pfropfpolymerisate C umfassen Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate C sind mindestens partiell vernetzt und besitzen Gelgehalte von über 20, vorzugsweise über 40 Gew.-%, insbesondere über 60 Gew.-%.

Bevorzugte Pfropfpolymerisate C umfassen Pfropfpolymerisate aus

C.1 5 bis 90, vorzugsweise 30 bis 80, Gewichtsteilen einer Mischung aus

C.1.1 50 bis 95 Gewichtsteilen Styrol, α-Methylstyrol, Halogen- oder Methyl-kernsubstituierte Styrole, Methylmethacrylat oder Mischungen dieser Verbindungen und

C.1.2 5 bis 50 Gewichtsteilen Acrylnitril, Methacrylnitril, Methylmethacrylat, Maleinsäureanhydrid, $C_1$-$C_4$-Alkyl- bzw. Phenyl-N-substituierte Maleinimide oder Mischungen dieser Verbindungen auf

C.2 10 bis 95, vorzugsweise 20 bis 70, Gewichtsteile Polymerisat mit einer Glasübergangstemperatur unter -10 °C.

Bevorzugte Pfropfpolymerisate C sind z.B. mit Styrol und/oder Acrylnitril und/oder (Meth)-Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate C sind z.B. ABS-Polymerisate, wie sie z.B. in der DE-OS 2 035 390 (= US-PS 4 644 574) oder in der DE-OS 2 248 242 (= GB-PS 1 409 275) beschrieben sind.

Besonders bevorzugte Pfropfpolymerisate C sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80, Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage erhältlich ist,

wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats C 0,1 bis 2, vorzugsweise 0,2 bis 0,6 µm, betragen.

(Meth-)Acrylsäureester I sind Ester der Acrylsäure bzw. Methacrylsäure und einwertiger Alkohole mit 1 bis 8 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie z.B. Styrol, Acrylnitril, Ester der Acryl- oder Methacrylsäure mit

1-4 C-Atomen in der Alkoholkomponente (wie Methylacrylat, Ethylacrylat, Methylmethacrylat, Ethylmethacrylat), Vinylester und Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugen-messungen (W. Scholtan, H. Lange, Kolloid. Z. und Z. Polymere 250 (1972), 782-796) bestimmt werden.

Besonders bevorzugte Pfropfpolymerisate C sind z.B. auch Pfropfpolymerisate aus

a) 20 bis 90 Gew.-%, bezogen auf C, Acrylatkautschuk mit einer Glasübergangstemperatur unter -20 °C als Pfropfgrundlage und

b) 10 bis 80 Gew.-%, bezogen auf C, mindestens eines polymerisierbaren ethylenisch ungesättigten Monomeren, dessen bzw. deren in Abwesenheit von (a) entstandenen Homo- bzw. Copolymerisate eine Glasübergangstemperatur über 25 °C hätten, als Pfropfmonomere.

Die Acrylatkautschuke (a) der Polymerisate C sind vorzugsweise Polymerisate aus Acrylsäurealkylestern, gegebenenfalls mit bis zu 40 Gew.-%, bezogen auf (a), anderer polymerisierbarer ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester; Halogenalkylester, vorzugsweise Halogen-$C_1$-$C_8$-alkylester, wie Chlorethylacrylat; sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Der Gelgehalt der Pfropfgrundlage (a) wird bei 25 °C in Dimethylformamid bestimmt (M. Hoffmann, H. Krömer, R. Kuhn, Polymeranalytik I und II, Georg Thieme Verlag, Stuttgart 1977).

Die für die bevorzugte Ausführungsform der gemeinsamen Fällung mit dem fluorierten Polyolefin D zu verwendenden wäßrigen Dispersionen von Pfropfpolymerisat C besitzen im allgemeinen Feststoffgehalte von 25 bis 60, vorzugsweise von 30 bis 45 Gew.-%.

Die fluorierten Polyolefine D sind hochmolekular und besitzen Glasübergangstemperaturen von über -30 °C, in der Regel von über 100 °C, Fluorgehalte von 59 bis 76, vorzugsweise von 65 bis 76, insbesondere von 70 bis 76 Gew.-% und mittlere Teilchendurchmesser $d_{50}$ von 0,05 bis 1000, vorzugsweise 0,08 bis 20 µm. Bevorzugte fluorierte Polyolefine D sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Intersience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472, und US-PS 3 671 487, 3 723 373 und 3 838 092). Sie besitzen Dichten von 1,2 bis 2,3 g/$cm^3$, vorzugsweise 1,2 bis 1,9 g/$cm^3$,

und weisen vorzugsweise Schmelzpunkte größer 300 °C auf.

Bevorzugte Dispersionen von fluoriertem Polyolefin D besitzen Feststoffgehalte von 30 bis 70, insbesondere von 50 bis 60, Gew.-%, Die Mischungen aus Dispersionen des Pfropfpolymerisats C und des fluorierten Polyolefins D können wie üblich aufgearbeitet werden, z.B. durch Sprühtrocknung oder Gefriertrocknung vorzugsweise bei Temperaturen von 20-150 °C, insbesondere von 50-100 °C.

Die Trocknung kann bei 50-200 °C, bevorzugt zwischen 70 °C und 150 °C erfolgen.

Das Gewichtsverhältnis von Pfropfpolymerisat C zu fluoriertem Polyolefin D im gemeinsam gefällten Produkt beträgt vorzugsweise 95:5 bis 60:40.

Wenn gemeinsam gefällte Komponenten C/D eingesetzt werden, beträgt die Menge C + D vorzugsweise 0,15 bis 4 Gew.-%, bezogen auf die Summe A + B.

Die Phosphorverbindungen E sind generell bekannt; vgl. z.B. Ullmanns Encyclopädie der technischen Chemie, 4. Aufl., Bd. 18, S. 301 f, Verlag Chemie, Weinheim 1979.

Bevorzugte Substituenten $R^1$ bis $R^3$ umfassen beispielsweise Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl.

Bevorzugte Phosphorverbindungen E umfassen beispielsweise Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und Trikresylphosphinoxid.

Die erfindungsgemäßen Formmassen können übliche Additive, wie Gleit- und Entformungsmittel, Nukleiermittel, Antistatika, Stabilisatoren, Füll- und Verstärkungsstoffe, Flammschutzmittel sowie Farbstoffe und Pigmente enthalten.

Die gefüllten bzw. verstärkten Formmassen können bis zu 60, vorzugsweise 10 bis 60 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe die auch verstärkend wirken können, sind Glaskugeln, Glimmer, Silikate, Quarz, Talkum, Titandioxid, Wollastonit.

Bevorzugte Flammschutzmittel sind Halogenverbindungen aus der Reihe Chlor- und Bromverbindungen. Sie werden im allgemeinen in Mengen bis zu 15 Gew.-%, bezogen auf flammwidrige Formmasse, eingesetzt. Besonders bevorzugt werden Mengen entsprechend einem Halogengehalt des Flammschutzmittels, bezogen auf flammwidrige Formmasse, von 3 bis 10 Gew.-%.

Geeignete Flammschutzmittel sind im Prinzip alle chlorierten oder bromierten Verbindungen, die bei der Herstellung und Verarbeitung der erfindungsgemäßen Formmassen, also bei Temperaturen von 200 bis 330 °C, weder flüchtig sind noch zur Zersetzung neigen; d.h. sie dürfen unter den genannten Bedingungen kein Halogen abspalten, so daß sie im Brandfall ihre Flammschutzwirkung noch entfalten können.

Beispiele für bevorzugte Flammschutzmittel umfassen beispielsweise Decabromdiphenylether, Octabromdiphenyl, Octabromdiphenylether und Tribromtetrachlortoluol, ferner oligomere Bromverbindungen, wie z.B. Oligocarbonate auf Basis Tetrabrombisphenol-A, und schließlich auch hochmolekulare Bromverbindungen, wie z.B. hochmolekulare Polycarbonate auf Basis Tetrabrombisphenol-A oder kernbromierte Polyphenylenoxide.

Der gegebenenfalls gewünschte Halogengehalt kann somit auch über das Polycarbonat A eingebracht werden.

Als synergistisch wirkende Mittel können die Flammschutzmittel, Schwermetallverbindungen, wie z.B. Antimontrioxid, enthalten; vgl. z.B. DE-OS 22 55 645, 23 10 742, 26 15 071, 26 22 414, 30 00 660, 30 02 985, 33 22 260, EP-A 63 031, US-PS 3 936 400, 4 280 005 und 4 344 878.

Die erfindungsgemäßen Formmassen besitzen eine hohe Flammwidrigkeit auch ohne Einsatz von üblichen Metallsynergisten und können sogar, wenn korrosive Brandgase vermieden werden müssen, ohne jegliche Chlor- und bromhaltigen Flammschutzmittel ohne wesentliche Eigenschaftseinbußen hergestellt werden.

Die erfindungsgemäßen Formmassen können durch Mischen der Komponenten bei erhöhter Temperatur, vorzugsweise im Bereich von 200 bis 330 °C, hergestellt werden, also z.B. in üblichen Vorrichtungen, wie Innenknetern, Extrudern oder Doppelwellenschnecken, schmelzcompoundiert oder schmelzextrudiert werden. Die Komponenten können gleichzeitig oder nacheinander in das Mischaggregat eingeführt werden.

Weiterer Gegenstand der Erfindung ist also ein Verfahren zur Herstellung der erfindungsgemäßen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind: Gehäuseteile für elektronische Rechner und Elektrogeräte, Abdeckplatten für das Baugewerbe, Automobilteile.

Formkörper können auch durch Tiefziehen aus vorher hergestellten Platten oder Folien hergestellt werden.

Weiterer Gegenstand der Erfindung ist demnach die Verwendung der Formmassen zur Herstellung von Formkörpern.

Die Prozentangaben in den nachfolgenden Beispielen beziehen sich auf das Gewicht; Teile sind Gewichtsteile.

## Beispiele

Eingesetzte Komponenten:

A1.
Lineares Polycarbonat auf Basis Bisphenol-A mit einer relativen Lösungsviskosität von 1,26-1,28, gemessen in $CH_2Cl_2$ bei 25 °C und einer Konzentration von 0,5 g/100 ml.

A2.
Copolycarbonat auf Basis von 90 Gew.-% Bisphenol-A und 10 Gew.-% Tetrabrombisphenol-A mit einer relativen Lösungsviskosität von 1,284, gemessen in $CH_2Cl_2$ bei 25 °C und einer Konzentration von 0,5 g/l; Gehalt an Brom: ca. 5 Gew.-%, bezogen auf A2.

B.
Polybutylenterephthalat mit einer Intrinsic-Viskosität (I.V) von 1,2 dl/g (gemessen als 5 %ige Lösung in Phenol/o-Dichlorbenzol (1:1 Gewichtsteile) bei 25 °C).

C.
Pfropfpolymerisat von 50 Gew.-% Styrol/Acrylnitril-Gemisch (im Gewichtsverhältnis von 72:28) auf 50 % teilchenförmiges Polybutadien einer mittleren Teilchengröße $d_{50}$ von 0,4 µm, erhalten durch Emulsionspolymerisation (Feststoffgehalt: 34 Gew.-%).

D.
Tetrafluorethylenpolymerisat (®Teflon 30 N der Fa. DuPont)

C + D (Cofällung)
Eine 60 %ige wäßrige Emulsion des Tetrafluorethylenpolymerisats D (Teilchendurchmesser 0,05 bis 0,5 µm) wurde mit der Emulsion des Pfropfpolymerisats C vermischt und mit 1,8 Gew.-%, bezogen auf Polymerfeststoff, phenolischer Antioxidantien stabilisiert. Bei 85 bis 95 °C wurde die Mischung mit einer wäßrigen Lösung von $MgSO_4$ (Bittersalz) und Essigsäure bei pH 4-5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet. Die erhaltene Mischung enthielt 10 % Tetrafluorethylenpolymerisat, bezogen auf C + D.

E. Triphenylphosphat
Das Mischen der Komponenten erfolgte auf einem 3-1-Innenkneter bei Temperaturen zwischen 200 und 220 °C.

Die Herstellung der Formkörper erfolgte auf einer Spritzgießmaschine bei 260 °C.

Das Brandverhalten der Proben wurde nach UL-Subj. 94 V in Prüfkörperdicken von 1,6 und 3,2 mm gemessen. Der UL 94 V-Test wird wie folgt durchgeführt:

Substanzproben werden zu Stäben der Abmessungen 127 x 12,7 x 1,6 mm bzw. 127 x 12,7 x 3,2 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet. Die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von $3{,}73 \times 10^4$ kJ/$m^3$ (1,000 BTU per cubic foot) benutzt.

Die UL 94 V-O-Klassifizierung umfaßt die nachstehend beschriebenen Eigenschaften von Materialien, die gemäß der UL 94-Vorschrift geprüft wurden. Die Materialien in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die eine längere Nachbrennzeit aufweisen (Klassifizierung V-1) oder die außerdem brennende Tropfen oder Teilchen abgeben, die die unterhalb der Probe angeordnete Watte entzünden (Klassifizierung V-2). Die Klassifizierung "n.B." heißt "nicht bestanden" und

bedeutet, daß die Proben eine Nachbrennzeit von ≧30 s aufweisen.

Die Bestimmung der Kerbschlagzähigkeit erfolgte in Anlehnung an DIN 53 453/ISO R 179 an Normkleinstäben der Abmessung 50 x 6 x 4 mm, wobei die Stäbe mit einer V-förmigen Kerbe der Kerbtiefe 2,7 mm versehen wurden.

Die Bestimmung der Wärmeformbeständigkeit nach Vicat (Methode B) erfolgte gemäß DIN 53 460.

Zur Ermittlung der Fließnahtfestigkeit wurde die Schlagzähigkeit nach DIN 53 452 (Charpy-Methode) an der Bindenaht von beidseitig angespritzten Prüfkörpern der Dimension 170 x 10 x 4 mm herangezogen.

**Tabelle:** Zusammensetzung und Eigenschaften der Formmassen

| Bei-spiele | A1 | A2 | Komponenten B (Gew.-Teile) | E | C+D | C | SAN* | UL 94 V 3,2 mm | 1,6 mm | Kerbschlag-zähigkeit (kJ/m²) | Wärmeform-beständigkeit (°C) | Fließnaht-festigkeit (kJ/m²) |
|---|---|---|---|---|---|---|---|---|---|---|---|---|
| 1 | 80 | | 20 | 10 | 2 | | | V0 | V0 | 8,8 | 95 | 78,1 |
| 2 | 60 | | 40 | 10 | 2 | | | V0 | V2 | 7,5 | 92 | 69,7 |
| 3 | | 80 | 20 | 5 | 2 | | | V0 | V0 | 10,0 | 116 | 62,6 |
| 4 | | 80 | 20 | 5 | 2 | | | V0 | V0 | 7,9 | 100 | 56,9 |
| 5 | | 60 | 40 | 5 | 2 | | | V1 | V1 | 10,5 | 116 | 64,1 |
| 6 | | 60 | 40 | 10 | 2 | | | V0 | V0 | 6,5 | 97 | 56,9 |
| Vergleichsbeispiele | | | | | | | | | | | | |
| 7 | 80 | | 20 | | | | | n.b.1) | n.b.1) | 11,9 | 127 | 10,4 |
| 8 | | 80 | 20 | | | | | V2 | V2 | 15,7 | 138 | 12,3 |
| 9 | | 75 | | 10 | 2 | | 25 | V0 | V0 | - | 103 | 3,0 |
| 10 | | 75 | | 10 | 2 | 10 | 25 | V0 | V0 | - | 100 | 4,0 |

*) Styrol/Acrylnitril-Copolymerisat (Gewichtsverhältnis 72:28) mit einer Intrinsic-Viskosität von 0,55 dl/g, gemessen in Dimethylformamid bei 20°C

1) nicht bestanden

Der obigen Tabelle können folgende Ergebnisse entnommen werden:

Die erfindungsgemäßen Formmassen zeichnen sich durch eine vorteilhafte Eigenschaftskombination von hoher Fließnahtfestigkeit, guter Kerbschlagzähigkeit und hoher Wärmeformbeständigeit und Flammwidrigkeit aus.

Die Vergleichsbeispiele 7 und 8 zeigen das Eigenschaftsniveau reiner Polycarbonat/Polyester-Mischungen ohne Zusätze.

Hochflammwidrige Formmassen lassen sich auch ohne chlorierte bzw. bromierte Verbindungen herstellen (Beispiele 1 und 2).

Wie Beispiele 9 und 10 zeigen, besitzen flammwidrige Einstellungen, in denen die Komponente B durch SAN (und gegebenenfalls Pfropfpolymerisat C) ersetzt ist, eine im Vergleich mit den erfindungsgemäßen Beispielen deutlich niedrigere Fließnahtfestigkeit.

## Patentansprüche

**1.** Thermoplastische Formmassen aus

A. 45 bis 95 Gew.-% aromatischem Polycarbonat,
B. 5 bis 55 Gew.-% Polyalkylenterephthalat,
C. 0,1 bis 30 Gew.-% Pfropfpolymerisat,
D 0,05 bis 5 Gew.-% fluoriertem Polyolefin und
E. 1 bis 20 Gew.-% Phosphorverbindung der Formel

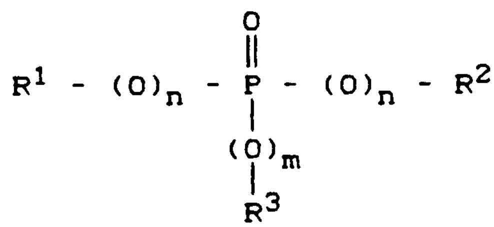

worin

| | |
|---|---|
| $R^1$, $R^2$ und $R^3$ | unabhängig voneinander gegebenenfalls halogeniertes $C_1$-$C_8$-Alkyl oder gegebenenfalls halogeniertes $C_6$-$C_{20}$-Aryl, |
| m | Null oder 1 und |
| n | Null oder 1 bedeuten, |

wobei sich die obigen Prozentangaben jeweils auf die Summe der Komponenten A + B beziehen.

**2.** Formmassen nach Anspruch 1, die 60 bis 90 Gew.-% Komponente A und 10 bis 40 Gew.-% Komponente B, jeweils bezogen auf die Summe der Komponenten A + B, enthalten.

**3.** Formmassen nach Ansprüchen 1 und 2, die 0,1 bis 12 Gew.-% Komponente C, bezogen auf die Summe der Komponenten A + B, enthalten.

**4.** Formmassen nach Ansprüchen 1 und 2, die 0,1 bis 3 Gew.-% Komponente C, bezogen auf die Summe der Komponenten A + B, enthalten.

**5.** Formmassen nach Ansprüchen 1 bis 4, die 0,1 bis 1 Gew.-% Komponente D, bezogen auf die Summe der Komponenten A + B, enthalten.

**6.** Formmassen nach Ansprüchen 1 bis 4, die 0,1 bis 0,5 Gew.-% Komponente D, bezogen auf die Summe der Komponenten A + B, enthalten.

**7.** Formmassen nach Ansprüchen 1 bis 6, die 2 bis 15 Gew.-% Komponente E, bezogen auf die Summe der Komponenten A + B, enthalten.

**8.** Formmassen nach Ansprüchen 1 bis 7, worin Komponente C als eine Mischung mit Komponente D, wobei D eine Teilchengröße von 0,05 bis 20 µm und eine Dichte von 1,2 bis 1,9 g/cm$^3$ aufweist, enthalten ist, die durch Mischen wäßriger Dispersionen beider Komponenten und anschließende gemeinsame Fällung erhalten worden ist.

**9.** Verfahren zur Herstellung der Formmassen nach Ansprüchen 1 bis 8 durch Mischen der Komponenten bei erhöhter Temperatur.

**10.** Verwendung der Formmassen nach Ansprüchen 1 bis 8 zur Herstellung von Formkörpern.

## Claims

**1.** Thermoplastic moulding compounds of
A. from 45 to 95% by weight of aromatic polycarbonate,
B. from 5 to 55% by weight of polyalkylene terephthalate,
C. from 0.1 to 30% by weight of a graft polymer,
D. from 0.05 to 5% by weight of a fluorinated polyolefin and
E. from 1 to 20% by weight of a phosphorus compound corresponding to the following formula

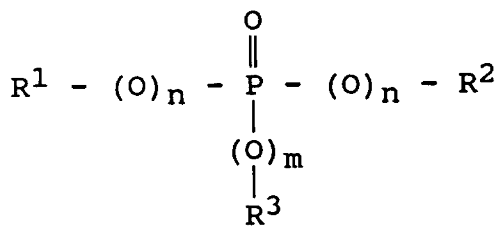

wherein

| | |
|---|---|
| $R^1$, $R^2$ and $R^3$ | denote, independently of one another, optionally halogenated $C_1$-$C_8$-alkyl or optionally halogenated $C_6$-$C_{20}$-aryl, |
| m | stands for zero or 1 and |
| n | stands for zero or 1, |

the above percentages being based in each case on the sum of components A + B.

**2.** Moulding compounds according to Claim 1 containing from 60 to 90% by weight of component A and from 10 to 40% by weight of component B, based in each case on the sum of components A + B.

**3.** Moulding compounds according to Claims 1 and 2 containing from 0.1 to 12% by weight of component C based on the sum of components A + B.

**4.** Moulding compounds according to Claims 1 and 2 containing from 0.1 to 3% by weight of component C, based on the sum of components A + B.

**5.** Moulding compounds according to Claims 1 to 4 containing from 0.1 to 1% by weight of component D, based on the sum of components A + B.

**6.** Moulding compounds according to Claims 1 to 4 containing from 0.1 to 0.5% by weight of component D, based on the sum of components A + B.

**7.** Moulding compounds according to Claims 1 to 6 containing from 2 to 15% by weight of component E, based on the sum of components A + B.

**8.** Moulding compounds according to Claims 1 to 7 wherein component C is contained as a mixture with component D, which component D has a particle size of from 0.05 to 20 µm and a density of from 1.2 to 1.9 g/cm$^3$, the said mixture having been obtained by mixing of aqueous dispersions of the two components followed by mutual precipitation.

**9.** A process for the preparation of the moulding compounds according to Claims 1 to 8 by mixing the components at an elevated temperature.

**10.** Use of the moulding compounds according to Claims 1 to 8 for the production of moulded products.

## Revendications

**1.** Mélanges à mouler thermoplastiques, comprenant

A. 45 à 95 % en poids de polycarbonate aromatique,
B. 5 à 55 % en poids de polytéréphtalate d'alkylène,
C. 0,1 à 30 % en poids d'un polymère greffé,
D. 0,05 à 5 % en poids de polyoléfine fluorée, et
E. 1 à 20 % en poids d'un composé de phosphore de formule

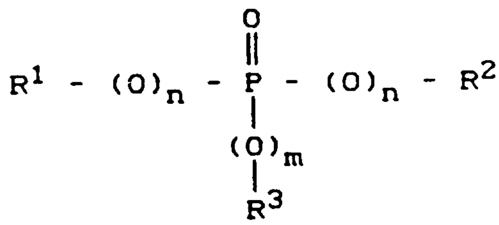

dans laquelle

$R^1$, $R^2$ et $R^3$ représentent, indépendamment les uns des autres, un groupe alkyle en $C_1$ à $C_8$ éventuellement halogéné ou un groupe aryle en $C_6$ à $C_{20}$ éventuellement halogéné,

m a la valeur zéro ou 1 et

n a la valeur zéro ou 1,

les indications de pourcentages données ci-dessus se rapportant dans chaque cas à la somme des composants A et B.

2. Mélanges à mouler suivant la revendication 1, qui contiennent 60 à 90 % en poids de composant A et 10 à 40 % en poids de composant B, dans chaque cas par rapport à la somme des composants A et B.

3. Mélanges à mouler suivant les revendications 1 et 2, qui contiennent 0,1 à 12 % en poids de composant C, par rapport à la somme des composants A + B.

4. Mélanges à mouler suivant les revendications 1 et 2, qui contiennent 0,1 à 3 % en poids de composant C, par rapport à la somme des composants A et B.

5. Mélanges à mouler suivant les revendications 1 à 4, qui contiennent 0,1 à 1 % en poids de composant D, par rapport à la somme des composants A + B.

6. Mélanges à mouler suivant les revendications 1 à 4, qui contiennent 0,1 à 0,5 % en poids de composant D par rapport à la somme des composants A + B.

7. Mélanges à mouler suivant les revendications 1 à 6, qui contiennent 2 à 15 % en poids de composant E par rapport à la somme des composants A + B.

8. Mélanges à mouler suivant les revendications 1 à 7, dans lesquels le composant C est contenu sous forme d'un mélange, avec le composant D dont le diamètre des particules est de 0,05 à 20 µm et dont la masse volumique est de 1,2 à 1,9 g/cm$^3$, qui a été obtenu par mélange de dispersions aqueuses des deux composants puis coprécipitation.

9. Procédé de production des mélanges à mouler suivant les revendications 1 à 8, par mélange des composants à température élevée.

10. Utilisation des mélanges à mouler suivant les revendications 1 à 8 pour la production de pièces moulées.